# EUROPÄISCHE PATENTSCHRIFT

(11) **EP 1 719 093 B1**
(45) Veröffentlichungstag und Bekanntmachung des Hinweises auf die Patenterteilung: **24.06.2009**
(21) Anmeldenummer: 05700857.5
(22) Anmeldetag: 13.01.2005
(51) Int. Cl.: G08G 1/16, B60Q 1/52

(54) **VERFAHREN UND WARNVORRICHTUNG ZUM GRAFISCHEN AUFBEREITEN EINES BILDES EINER KAMERA**
METHOD AND WARNING DEVICE FOR GRAPHICALLY PROCESSING AN IMAGE OF A CAMERA
PROCEDE ET DISPOSITIF D'ALERTE POUR TRAITER DE MANIERE GRAPHIQUE L'IMAGE D'UNE CAMERA

(30) Priorität: 23.02.2004 DE 102004009924
(43) Veröffentlichungstag der Anmeldung: 08.11.2006
(73) Patentinhaber: Valeo Schalter und Sensoren GmbH, 74321 Bietigheim-Bissingen (DE)
(72) Erfinder: MEYER, Thorsten, 74321 Bietigheim-Bissingen (DE); HEDDERICH, Markus, 74354 Besigheim (DE); BENZ, Jürgen, 74354 Besigheim (DE)
(74) Vertreter: Steimle, Josef
(86) Internationale Anmeldenummer: PCT/EP2005/000239
(87) Internationale Veröffentlichungsnummer: WO 2005/091245

(56) Entgegenhaltungen:
- US-A- 5 410 346
- US-A- 5 949 331
- US-A1- 2002 171 739

## Beschreibung

Die Erfindung betrifft ein Verfahren und ein Computerprogramm zum grafischen Aufbereiten eines von einer Kameraeinrichtung bereitgestellten Bildes von der Umgebung eines Kraftfahrzeugs Kfz, insbesondere in Fahrtrichtung des Kfz. Darüber hinaus betrifft die Erfindung eine Warnvorrichtung zum Durchführen dieses Verfahrens sowie einen Datenträger mit dem Computerprogramm.

Im Stand der Technik sind Verfahren und Warnvorrichtungen der genannten Art grundsätzlich bekannt. Derartige Wärnvorrichtungen umfassen typischerweise eine Kameraeinrichtung, welche zum Beispiel in das Heck eines Fahrzeugs eingebaut ist, um die Umgebung des Fahrzeugs im Heckbereich zu erfassen. Ein von dieser Kameraeinrichtung aufgenommenes Bild wird typischerweise mit Hilfe einer Bildaufbereitungseinrichtung aufbereitet und dann dem Fahrer auf einer Anzeigeeinrichtung im Armaturenbrett gezeigt. Anhand des dargestellten Bildes kann sich der Fahrer dann beim Rückwärtsfahren orientieren.

Um dem Fahrer die Orientierung beim Rangieren in Rückwärtsrichtung zu vereinfachen, ist es bekannt, im Rahmen der Aufbereitung des von der Kameraeinrichtung gelieferten Bildes grafische Objekte in das Bild einzubauen, welche den Spurverlauf für den Fahrer veranschaulichen, auf welchem sich das Fahrzeug voraussichtlich beim Rückwärtsfahren bewegen wird. Dieser Spurverlauf wird traditionell aufgrund des aktuellen Lenkwinkels ermittelt.

Ein derartiges System ist beispielsweise aus der US 5,949,331 bekannt.

Das Dokument US 5,410, 346 beschreibt ein System zur. Umfeldüberwachung, welches mittels eines stereoskopischen optischen Systems Entfernungsdaten über ein Umfeld eines Kraftfahrzeugs errechnet und in einem Speicher zur weiteren Auswertung speichert.

Die Qualität des von der Kameraeinrichtung bereitgestellten Bildes ist jedoch oftmals suboptimal. Insbesondere bei dunklem Wetter, bei Regen oder Nebel sind eventuell in der Umgebung des Fahrzeugs vorhandene Hindernisse oftmals nur undeutlich zu erkennen. Dementsprechend ist das Gefahrenpotential, welches von derartigen Hindernissen in der Umgebung des Fahrzeugs für das Fahrzeug ausgeht, für den Fahrer oftmals nicht realistisch einschätzbar.

Ausgehend von diesem Stand der Technik ist es deshalb die Aufgabe der Erfindung, ein bekanntes Verfahren und Computerprogramm zum grafischen Aufbereiten eines von einer Kameraeinrichtung bereitgestellten Bildes einer Umgebung eines Kraftfahrzeugs sowie eine Warnvorrichtung zum Durchführen dieses Verfahrens derart weiterzubilden, dass ein durch in der Umgebung des Kraftfahrzeugs eventuell vorhandenes Hindernis realisiertes Gefahrenpotential für das Kraftfahrzeug für den Betrachter des aufbereiteten Bildes, das heißt insbesondere für den Fahrer des Kraftfahrzeugs, realistischer und noch deutlicher veranschaulicht wird.

Diese Aufgabe wird durch das in Patentanspruch 1 beanspruchte Verfahren gelöst.

Zum Verständnis der vorliegenden Erfindung ist es wichtig, zwischen dem von der Kameraeinrichtung bereitgestellten Bild, der grafischen Aufbereitung dieses Bildes und dem aus dieser Aufbereitung resultierenden aufbereiteten Bild zu unterscheiden. Der Betrachter, insbesondere der Fahrer des Kraftfahrzeugs, bekommt grundsätzlich nur das aufbereitete Bild zu sehen.

Es ist weiterhin wichtig, zwischen den in der Umgebung des Kraftfahrzeugs real vorhandenen Objekten, wie insbesondere den Hindernissen für das Kfz, welche auf dem von der Kameraeinrichtung gelieferten Bild zu sehen sind, und den im Rahmen der Aufbereitung des Bildes künstlich generierten imaginären grafischen Objekten, wie sie im Rahmen der nachfolgenden Beschreibung weiter erläutert werden, zu unterscheiden.

Vorteilhafterweise wird durch das beanspruchte Verfahren der Vorgang der Erkennung eines Gefährdungspotentials, welches von einem eventuell in der Umgebung des Kraftfahrzeugs vorhandenen Hindernis für das Kraftfahrzeug und damit eventuell auch für den Fahrer ausgeht, automatisiert. Die Kameraeinrichtung selber ist dazu nicht in der Lage. Sie bildet die Umgebung des Kraftfahrzeugs neutral, das heißt ohne Bewertung, auf einem Bild ab. "Ohne Bewertung" bedeutet in diesem Zusammenhang, dass die Kameraeinrichtung ihrerseits insbesondere keine Kenntnis darüber hat, welche Teile des von ihr erfassten Bildes ein Hindernis in der Umgebung des Fahrzeugs darstellen und welche nicht. Erst recht ist die Kameraeinrichtung nicht in der Lage, das eventuell von diesem Hindernis für das Kraftfahrzeug ausgehende Gefahrenpotential zu bewerten.

Um erkennen zu können, welche Teile des von der Kameraeinrichtung aufgenommenen Bildes ein Hindernis für das Fahrzeug repräsentieren und welche nicht, wird erfindungsgemäß vorgeschlagen, zunächst die reale Position des Hindernisses in der Umgebung des Kraftfahrzeugs, vorzugsweise relativ zur Position des Kraftfahrzeugs beziehungsweise zur Position der Kameraeinrichtung, zu ermitteln. Dies geschieht erfindungsgemäß mit Hilfe einer Hindernisdetektions- beziehungsweise Abstandsmessvorrichtung, die zum Beispiel auf Ultraschall- oder Radar- oder Kamera/Bildanalysetechnologie basiert. Erfindungsgemäß wird eine derartige Vorrichtung ergänzend zu der Kameraeinrichtung eingesetzt. Die von dieser ermittelte reale Position des Hindernisses in der Umgebung des Kfz wird dann erfindungsgemäß mit Hilfe geeigneter mathematischer Algorithmen oder Transformationen in die entsprechende Position des Hindernisses in dem von der Kameraeinrichtung bereitgestellten Bild umgerechnet. In der Regel handelt es sich bei der realen Position des Hindernisses in der Umgebung um eine dreidimensionale Größe, während es sich bei der Position des Hindernisses in dem Bild um eine zweidimensionale Größe handelt; die jeweils angewandte Transformation leistet dann eine entsprechende Umrechnung von der zum Beispiel dreidimensionalen in eine zweidimensionale Position.

Erfindungsgemäß erfolgt die Aufbereitung des von der Kameraeinrichtung bereitgestellten Bildes in Kenntnis der zuvor ermittelten Position des Hindernisses in dem von der Kameraeinrichtung bereitgestellten Bild. Aufgrund dieser Kenntnis kann das Bild nun ganz gezielt für den Betrachter, insbesondere den Fahrer des Kraftfahrzeugs so aufbereitet werden, dass er ganz besonders deutlich auf das Hindernis selber, aber auch auf das von diesem Hindernis für das Kraftfahrzeug ausgehende Gefahrenpotential, zum Beispiel in Form der Größe des Abstandes zwischen dem Kraftfahrzeug und dem Hindernis hingewiesen wird.

Für eine besonders einfache Realisierung des erfindungsgemäßen Verfahrens ist es vorteilhafterweise ausreichend, die Position des Hindernisses in Bezug auf das Kraftfahrzeug beziehungsweise die Kameraeinrichtung lediglich in einer Dimension, das heißt in Form des entsprechenden Abstandes, zu ermitteln.

Um die Orientierung des Fahrers des Kraftfahrzeugs in der von der Kameraeinrichtung erfassten Umgebung zu erleichtern, ist es vorteilhaft, im Rahmen der Aufbereitung des von der Kameraeinrichtung bereitgestellten Bildes ein grafisches Objekt in Form des voraussichtlichen Spurverlaufs, auf welchem sich das Fahrzeug in naher Zukunft voraussichtlich bewegen wird, in das Bild der Kameraeinrichtung einzublenden. Um eine Verwirrung beziehungsweise Irritation des Fahrers zu vermeiden, wird erfindungsgemäß vorgeschlagen, dieses grafische Objekt jedoch nur in solchen Bereichen des von der Kameraeinrichtung bereitgestellten Bildes einzublenden, welche kein Hindernis darstellen. Der erfindungsgemäß ermittelte Abstand zwischen dem Hindernis und dem Kraftfahrzeug wird vorteilhafterweise dazu verwendet, den eingeblendeten Verlauf der Fahrspur so zu begrenzen, dass keine Überlappung des grafischen Objektes mit dem in dem Bild abgebildeten Hindernis entsteht. Alternativ zu einer derartigen totalen Begrenzung ist es denkbar, den Verlauf der Fahrspur in etwa der Höhe der ermittelten Position des Hindernisses im Bild für größere Entfernungen von dem Kraftfahrzeug nur andeutungsweise, zum Beispiel in Form gestrichelter Linien, darzustellen.

Mit Hilfe der verwendeten Hindernisdetektionsbeziehungsweise Abstandsmessvorrichtungen ist es in der Regel nicht nur möglich, Abstände zu messen, sondern ist es in der Regel auch möglich, eine zweite und/oder dritte Dimension der Position des Hindernisses in der räumlichen Umgebung in Bezug auf das Kraftfahrzeug zu ermitteln. Vereinfacht ausgedrückt bedeutet dies, dass eine Aussage darüber möglich ist, in welchem Teil beziehungsweise Raumbereich der von einer derartigen Einrichtung erfassten Umgebung um das Kfz das Hindernis positioniert ist. Vorteilhafterweise wird erfindungsgemäß ein grafisches Objekt, insbesondere ein Balken, vorgeschlagen, welches eine Übermittlung dieser Information über den Raumbereich zusätzlich zu dem Abstand ermöglicht. Alle im Rahmen der Erfindung vorgestellten grafischen Objekte werden vorteilhafterweise semitransparent oder nur als Umrisse dargestellt, um die an der jeweiligen Position des grafischen Objektes befindlichen Teile des Bildes der Kameraeinrichtung nicht zu verdecken. Alternativ dazu kann das grafische Objekt jedoch auch so ausgebildet sein, dass es diese Teile zumindest teilweise verdeckt. Die grafischen Objekte können dann als farblich gestaltete Flächen dargestellt werden, wobei die Farbgebung optional nach Maßgabe des ermittelten Abstandes des Hindernisses von dem Kraftfahrzeug beziehungsweise von der Kameraeinrichtung variiert werden kann.

Es ist jedoch keineswegs zwingend, dass die Aufbereitung des von der Kameraeinrichtung gelieferten Bildes durch Einblendung beziehungsweise Überlagerung von den genannten grafischen Objekten erfolgt. Es ist auch denkbar, dass stattdessen ausgewählte Teile des von der Kameraeinrichtung bereitgestellten Bildes direkt manipuliert, zum Beispiel aufgehellt oder eingefärbt werden. Bei den ausgewählten Teilen handelt es sich vorzugsweise um diejenigen Bereiche, von denen aufgrund der von der Hindernisdetektion beziehungsweise Abstandsmesseinrichtung gelieferten Informationen bekannt ist, dass sie das Hindernis repräsentieren. Auch die in dem von der Kameraeinrichtung bereitgestellten Bild unmittelbar vorgenommenen Manipulationen werden vorteilhafterweise nach Maßgabe durch die Größe des aktuell ermittelten Abstandes zwischen dem Hindernis und dem Kfz farblich variiert.

Die oben genannte Aufgabe der Erfindung wird weiterhin durch ein Computerprogramm und eine Warnvorrichtung für ein Kfz zum Durchführen des beanspruchten Verfahrens sowie durch einen Datenträger mit dem genannten Computerprogramm gelöst. Die Vorteile dieser Lösungen entsprechen den oben mit Bezug auf das beanspruchte Verfahren genannten Vorteilen.

Der Beschreibung sind insgesamt sieben Figur beigefügt, wobei
- Figur 1: die Warnvorrichtung gemäß der Erfindung;
- Figur 2: den Einbau der Warnvorrichtung in ein Kraftfahrzeug;
- Figur 3: ein erstes Ausführungsbeispiel für das erfindungsgemäße Verfahren;
- Figur 4: ein zweites Ausführungsbeispiel für das erfindungsgemäße Verfahren;
- Figur 5: ein drittes Ausführungsbeispiel für das erfindungsgemäße Verfahren;
- Figur 6: ein viertes Ausführungsbeispiel für das erfindungsgemäße Verfahren; und
- Figur 7: ein fünftes Ausführungsbeispiel für das erfindungsgemäße Verfahren
zeigt.

Die Erfindung wird nachfolgend anhand von Ausführungsbeispielen unter Bezugnahme auf die genannten Figuren detailliert beschrieben.

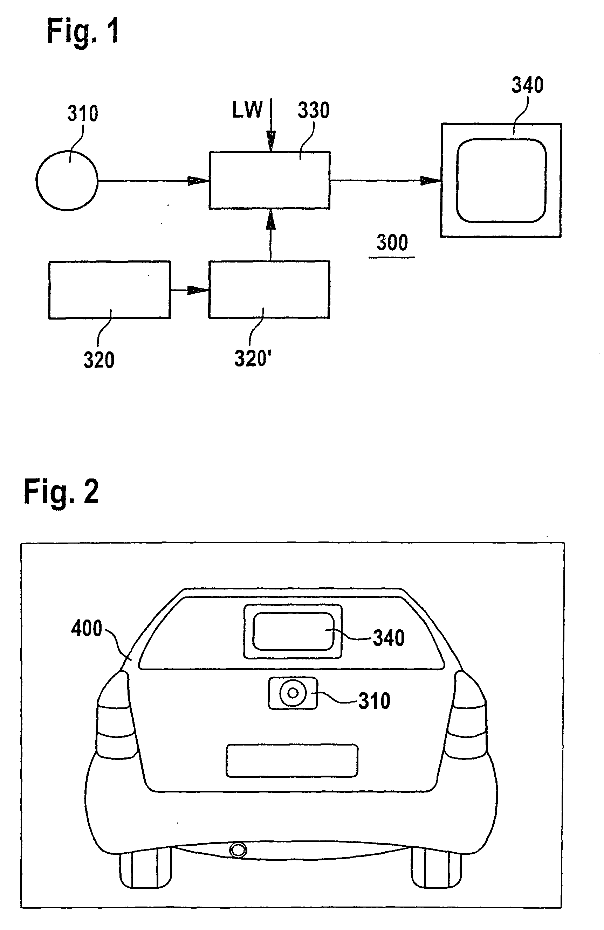

Figur 1 veranschaulicht den Aufbau einer Warnvorrichtung 300 gemäß der Erfindung für ein Kraftfahrzeug Kfz 400, siehe Figur 2. Die Warnvorrichtung 300 umfasst eine Kameraeinrichtung 310 zum Erzeugen von Bildern von der Umgebung des Kraftfahrzeugs 400, vorzugsweise in Fahrtrichtung. Die Warnvorrichtung 300 umfasst weiterhin eine der Kameraeinrichtung 310 nachgeschaltete Bildaufbereitungseinrichtung 330 zum Aufbereiten der von der Kameraeinrichtung 310 erzeugten Bilder. Weiterhin umfasst die Warnvorrichtung 300 eine Hindernisdetektions-/Abstandsmesseinrichtung 320. Diese dient insbesondere zum Ermitteln der realen Position eines eventuell in der Umgebung des Kraftfahrzeugs 400 vorhandenen Hindernisses 100 in Bezug auf die Position des Kraftfahrzeugs 400. Darüber hinaus umfasst die Warnvorrichtung 300 eine Transformationseinrichtung 320' zum Transformieren der von der Hindernisdetektions-/Abstandsmesseinrichtung 320 erfassten realen Position des Hindernisses 100 in der Umgebung in eine entsprechende Position des Hindernisses in dem von der Kameraeinrichtung bereitgestellten Bild. Die Bildaufbereitungseinrichtung 330 ist erfindungsgemäß ausgebildet, die Aufbereitung des von der Kameraeinrichtung 310 bereitgestellten Bildes unter Berücksichtigung beziehungsweise in Kenntnis der zuvor ermittelten Position des Hindernisses 100 in dem Bild durchzuführen. Die Bildaufbereitungseinrichtung 330 ist weiterhin ausgebildet, die Aufbereitung des Bildes auch unter Berücksichtigung von Fahrzeugparametern, insbesondere dem Lenkwinkel, durchzuführen. Das von der Bildaufbereitungseinrichtung 330 letztendlich aufbereitete Bild wird auf einer Anzeigeeinrichtung 340 für einen Betrachter, insbesondere den Fahrer des Kfz, dargestellt.

Figur 2 veranschaulicht, dass diese Anzeigeeinrichtung 340 vorzugsweise im Sichtbereich des Fahrers des Kraftfahrzeugs 400 angeordnet ist. Demgegenüber ist die Kameraeinrichtung 310 vorzugsweise im Heckbereich des Fahrzeugs 400 angeordnet, so dass sie die Umgebung des Fahrzeugs 400 insbesondere bei Rückwärtsfahrt erfassen kann.

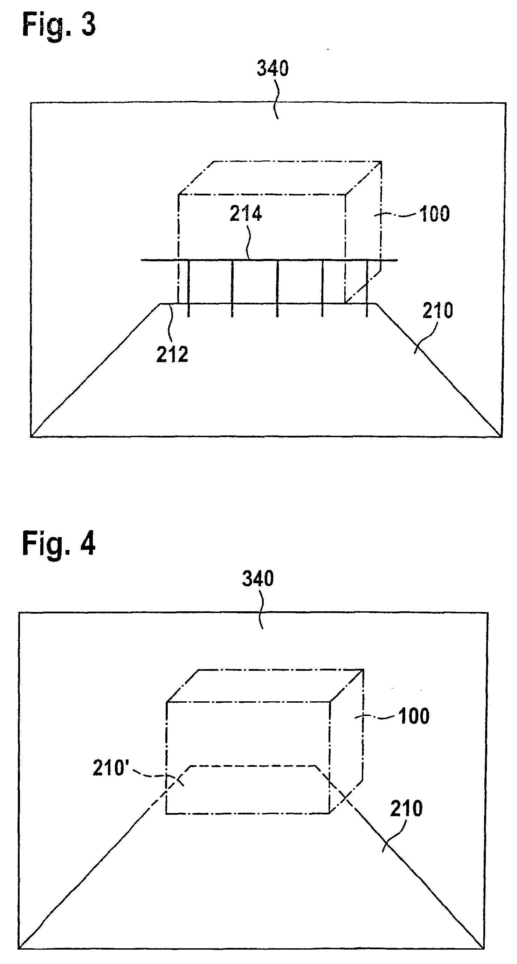

Die nachfolgenden Figuren 3 - 7 zeigen unterschiedliche Ausführungsbeispiele für aufbereitete Bilder, wie sie gegebenenfalls in der Anzeigeeinrichtung 340 angezeigt werden können. Dabei sind die in dem von der Kameraeinrichtung 310 bereitgestellten Bild dargestellten realen Objekte, insbesondere das Hindernis 100 durch strichpunktierte Linien dargestellt, während die künstlich im Rahmen der Aufbereitung in das Bild eingeblendeten grafischen Objekte mit durchgezogenen oder gestrichelten Linien dargestellt sind. Bei allen Figuren wird die Position des Fahrzeugs beziehungsweise der Kameraeinrichtung 310 im Wesentlichen durch den unteren Bildrand repräsentiert.

Figur 3 zeigt ein erstes Ausführungsbeispiel für ein aufbereitetes Bild. Dieses Bild ist durch ein grafisches Objekt 210 aufbereitet, welches den Verlauf einer Fahrspur, auf welcher sich das Fahrzeug 400 zukünftig voraussichtlich bewegen wird, repräsentiert. In Bild 3 repräsentiert das grafisches Objekt 210 einen gradlinigen Verlauf der Fahrspur, welcher insbesondere durch Auswerten des aktuellen Lenkradwinkels des Kfz ermittelt wird. Vorteilhafterweise wird dieses grafisches Objekt 210 beziehungsweise der dadurch repräsentierte Verlauf der Fahrspur in etwa auf Höhe der Position des Hindernisses 100 begrenzt. Die Höhe beziehungsweise Länge des grafischen Objektes, gemessen ab der Unterkante des Bildes, repräsentiert den mit Hilfe der Hindernisdetektions-/Abstandsmesseinrichtung 330 ermittelten Abstand zwischen dem Hindernis 100 und dem Fahrzeug 400.

Die Begrenzung erfolgt vorteilhafterweise in Form einer Begrenzungslinie 212 und/oder in Form eines zusätzlichen weiteren grafischen Objektes 214, welches eine Begrenzungseinrichtung wie beispielsweise eine Schranke, ein Gatter oder einen Zaun repräsentiert. In diesem Fall kann eine Überlagerung des grafischen Objektes 210 mit dem Hindernis 100 ausnahmsweise akzeptiert werden, ohne dass der Fahrer dadurch allzu sehr irritiert wird; grundsätzlich sollte jedoch eine derartige Überlagerung vermieden werden. Durch die Begrenzungslinie 212 und/oder durch die Begrenzungseinrichtung 214 wird dem Betrachter des Bildes, insbesondere dem Fahrer des Kfz die von dem Hindernis 100 ausgehende Kollisionsgefahr besonders deutlich veranschaulicht. Ihm wird auf diese Weise klar zu verstehen gegeben, dass wenn er mit dem Kraftfahrzeug über die Begrenzung hinausfährt, eine Kollision mit dem Hindernis 100 unweigerlich eintritt.

Figur 4 zeigt ein zweites Ausführungsbeispiel zur Gestaltung des den Verlauf der Fahrspur darstellenden grafischen Objektes 210. Anstatt diesen Verlauf, wie in Figur 3 gezeigt, über die Begrenzung 212, 214 hinaus nicht mehr darzustellen, kann es vorteilhaft sein, den Verlauf der Fahrspur jenseits dieser Begrenzung, das heißt für größere Entfernungen von dem Kraftfahrzeug 400, gestrichelt darzustellen; siehe Bezugszeichen 210'. Selbstverständlich kann das in Figur 3 gezeigte erste Ausführungsbeispiel auch mit dem in Figur 4 gezeigten zweiten Ausführungsbeispiel kombiniert werden.

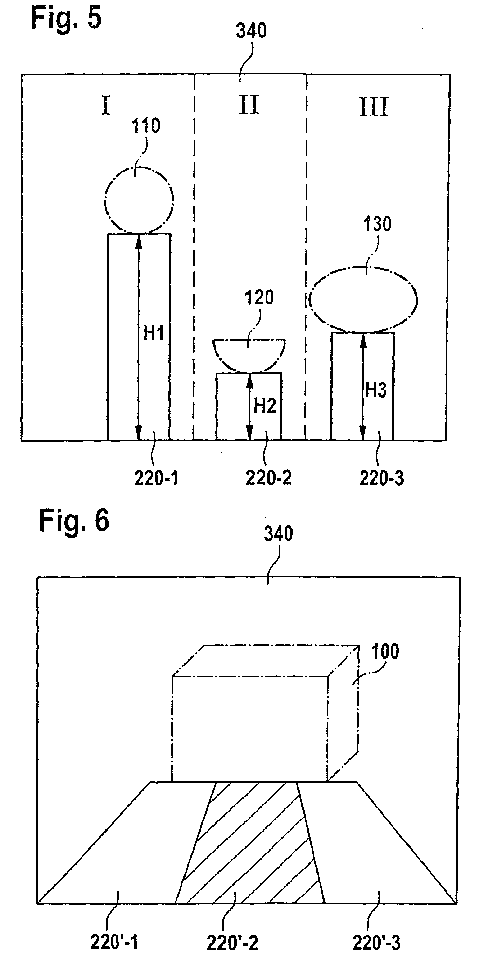

Für die Einzeichnung der bei der Beschreibung der Figur 3 erwähnten Begrenzung an der richtigen Position, das heißt vorzugsweise an der Position der der Kameraeinrichtung 310 zugewandten beziehungsweise nächstgelegensten Seite 110 des Hindernisses 100, ist es lediglich erforderlich, den Abstand zwischen dem Hindernis 100 und dem Kraftfahrzeug 400 zu kennen. Darüber hinaus bietet die Hindernisdetektions-/Abstandsmesseinrichtung 320 jedoch oftmals auch die Möglichkeit, festzustellen, in welchem Bereich des von ihr detektierten Raumes sich das Hindernis 100 befindet. So kann beispielsweise unterschieden werden, ob sich ein Hindernis im Wesentlichen links von der Kameraeinrichtung 320, dieser genau gegenüber oder rechts von der Einrichtung 320 befindet. Diese drei möglichen Raumbereiche sind in Figur 5 mit den Bezugszeichen I, II und III bezeichnet. Bei geeigneter Ausbildung der jeweils verwendeten Hindernisdetektions-/Abstandsmesseinrichtung ist selbstverständlich auch eine feinere oder weniger feine Unterteilung der Raumbereiche möglich. Um den Betrachter des aufbereiteten Bildes neben einer Information über den Abstand des Hindernisses zu dem Fahrzeug 400 auch eine Information über den Raumbereich, in welchem sich das Hindernis befindet, zu geben, wird erfindungsgemäß vorgeschlagen, ein geeignetes grafisches Objekt in das von der Kameraeinrichtung 310 bereitgestellte Bild einzublenden, welches den jeweiligen Raumbereich I, II oder III und die Position des Hindernisses innerhalb dieses Raumbereiches für den Betrachter des aufbereiteten Bildes kennzeichnet und optisch hervorhebt. In Figur 5 ist dieses grafische Objekt in Form von sich vorzugsweise von der Unterkante des Bildes in vertikaler Richtung erstreckenden Balken 220-1...-3 für die einzelnen Detektionsbereiche beziehungsweise Raumbereiche I, II und III dargestellt. Die Bezugszeichen I, II und III sind in dem aufbereiteten Bild vorzugsweise genauso wenig dargestellt wie die in Figur 5 dargestellten vertikalen gestrichelten Linien, welche die Begrenzung der Raumbereiche gegeneinander andeuten. Aus der horizontalen Positionierung der vertikalen Balken in Bezug auf die in der Mitte der Unterkante des Bildes angenommene Position der Kameraeinrichtung kann der Betrachter erkennen, ob ein Balken auf ein Hindernis 110 in dem linken Raumbereich I hinweist, wie der Balken 220-1, oder auf ein Hindernis 120 in der Mitte des beobachteten Raumbereiches II, wie der Balken 220-2, oder auf ein Hindernis 130 in dem rechten Raumbereich III, wie der Balken 220-3. Die Höhen beziehungsweise Längen H1, H2, H3 der Balken 220-1, 220-2 und 220-3 repräsentieren den jeweils von der Abstandsmesseinrichtung 320 ermittelten Abstand zwischen dem Hindernis 110, 120, 130 und dem Kraftfahrzeug 400 (in Figur 5 nicht gezeigt).

Figur 6 zeigt ein viertes Ausführungsbeispiel für ein aufbereitetes Bild. Im Unterschied zu den in Figur 5 gezeigten Balken sind die Umrisse der Balken 220'-1...-3 hier an die von der Bildaufbereitungseinrichtung 320 aufgrund des Lenkwinkels LW ermittelte Fahrspur angepasst und entsprechend verbogen beziehungsweise verzerrt dargestellt. Genau wie in Figur 5 repräsentiert die Höhe beziehungsweise Länge der Balken 220'-1,...-3 den Abstand des Hindernisses 100 zu dem Fahrzeug 400 beziehungsweise zu der Kameraeinrichtung 310. Die Tatsache, dass in den Figuren 5 und 6 jeweils Balken für alle drei Raumbereiche I, II und III dargestellt sind, ist damit zu begründen, dass entweder ein Hindernis 100 vorhanden ist, welches in alle drei Raumbereiche hineinragt, wie in Figur 6 gezeigt, oder dass unterschiedliche Hindernisse 110, 120 und 130 in den verschiedenen Raumbereichen I, II und III vorhanden sind. Wenn in einem Raumbereich kein Hindernis detektiert wird, sollte für diesen Raumbereich vorzugsweise auch kein grafisches Objekt, insbesondere kein Balken 220 vorgesehen werden.

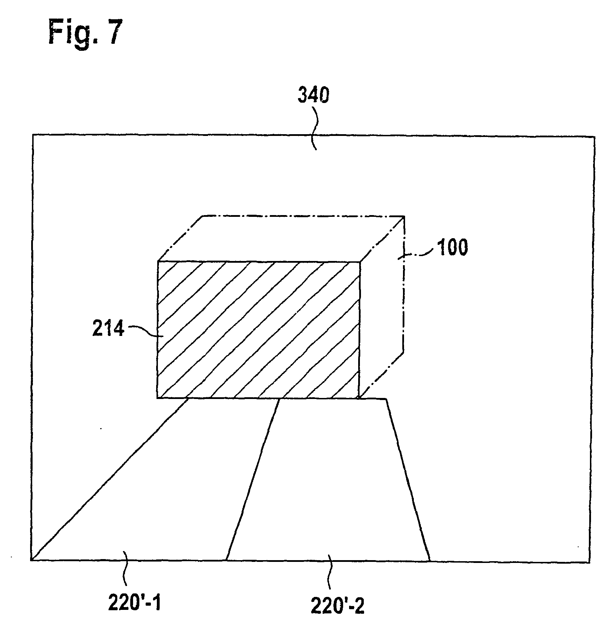

Oben wurde bereits erwähnt, dass vorteilhafterweise keine Überdeckung eines in dem von der Kameraeinrichtung 310 bereitgestellten Bildes dargestellten Hindernisses durch ein künstlich eingefügtes grafisches Objekt erfolgen soll. Als Ausnahme von diesem Grundsatz können erfindungsgemäß jedoch grafische Objekte 214 an der Position des Hindernisses 100 in dem von der Kameraeinrichtung 310 bereitgestellten Bild vorgesehen werden. Diese grafischen Objekte dienen vorzugsweise dazu, denjenigen Bereich beziehungsweise diejenige Seite des Hindernisses 100 für den Betrachter des Bildes optisch hervorzuheben, welcher beziehungsweise welche der Kameraeinrichtung zugewandt ist. In Figur 7 ist ein solches grafisches Objekt 214 dargestellt. Der Umriss dieses grafischen Objektes 214 entspricht in diesem Fall zufällig genau der Kontur der Seite des Hindernisses 100, welche der Kameraeinrichtung zugewandt ist. Alternativ dazu kann der Umriss eines solchen grafischen Objektes grundsätzlich jedoch beliebig gestaltet sein, vorzugsweise ist er jedoch in einer geometrischen Grundform, wie zum Beispiel einem Rechteck, einer Ellipse oder einem Dreieck gestaltet. Für alle im Rahmen der Erfindung erwähnten grafischen Objekte gilt, dass sie vorzugsweise semitransparent oder nur als Umriss dargestellt werden, um das von der Kameraeinrichtung 310 bereitgestellte Bild nicht unnötig zu überdecken. Alternativ dazu können die grafischen Objekte jedoch auch als farblich gestaltete Fläche ausgestaltet sein, wobei die Farbgebung nach Maßgabe des ermittelten Abstandes des Hindernisses 100 von dem Kraftfahrzeug 400 beziehungsweise der Kameraeinrichtung 310 variiert werden kann. So ist es beispielsweise denkbar, dass das grafische Objekt zum Beispiel rot eingefärbt wird, wenn der Abstand kleiner als ein vorgegebener unterer Schwellenabstand ist, dass es gelb für einen Abstand zwischen dem unteren ersten und einem zweiten Schwellenabstand und grün für einen Abstand jenseits des zweiten Schwellenabstandes eingefärbt wird.

Alle aufgezeigten Variationsmöglichkeiten für die grafischen Objekte sind selbstverständlich in beliebiger Kombination miteinander realisierbar, soweit sie sich nicht gegenseitig ausschließen.

Der Fahrer des Kraftfahrzeugs 400 als Betrachter des aufbereiteten Bildes kann jedoch nicht nur durch die vorstehend aufgezeigten Varianten für die Ausgestaltung der grafischen Objekte auf eine bestehende Kollisionsgefahr hingewiesen werden. Weiterhin beziehungsweise in Kombination zu den grafisches Objekten besteht auch die Möglichkeit, das von der Kameraeinrichtung 310 bereitgestellte Bild unmittelbar zum Beispiel durch eine Aufhellung oder Einfärbung zu manipulieren. Auch bei einer derartigen Manipulation besteht, wie oben für die grafischen Objekte beschrieben, - optional - die Möglichkeit, die Manipulation nach Maßgabe durch die Größe des ermittelten Abstandes des Hindernisses 100 von dem Kfz zum Beispiel in Form von Farb- oder Blinkeffekten zu variieren.

Das erfindungsgemäße Verfahren wird vorzugsweise in Form eines Computerprogramms realisiert. Ein derartiges Computerprogramm kann, gegebenenfalls mit weiteren Computerprogrammen, auf einem computerlesbaren Datenträger abgespeichert werden. Bei dem Datenträger kann es sich um eine Diskette, eine Compact Disc, einen sogenannten Flash-Memory oder dergleichen handeln. Das auf dem Datenträger abgespeicherte Computerprogramm kann dann als Produkt an einen Kunden übertragen oder verkauft werden. Alternativ zu einer Übertragung per Datenträger besteht auch die Möglichkeit einer Übertragung über ein elektronisches Kommunikationsnetzwerk, insbesondere das Internet.

## Patentansprüche

1. Verfahren zum graphischen Aufbereiten eines von einer Kameraeinrichtung (310) bereitgestellten Bildes von der Umgebung eines Kraftfahrzeugs Kfz (400), insbesondere in Fahrtrichtung des Kfz, für einen Betrachter, insbesondere den Fahrer des Kfz, aufweisend die Schritte: Detektieren eines Hindernisses (100) in der Umgebung des Kfz (400) und Ermitteln von dessen realer Position, vorzugsweise relativ zu der Position des Kfz (400); Ermitteln der realen Position des Hindernisses in der Umgebung und der entsprechenden Position des Hindernisses (100) in dem von der Kameraeinrichtung bereitgestellten Bild; und Durchführen der Aufbereitung des Bildes unter Berücksichtigung der ermittelten Position des Hindernisses im Bild, wobei ein grafisches Objekt (210) in Form des vorzugsweise aufgrund des Lenkradwinkels des Kfz (400) ermittelten Verlaufs einer Fahrspur, auf welcher sich das Fahrzeug (400) zukünftig voraussichtlich bewegen wird, in das Bild der Kameraeinrichtung (310) eingeblendet wird; die Position des Hindernisses in der Umgebung in Form des realen Abstandes zwischen dem Hindernis und dem Kfz (400) beziehungsweise der Kameraeinrichtung (310) ermittelt wird; und die Position des Hindernisses (100) im Bild, vorzugsweise die Position der der Kameraeinrichtung zugewandten beziehungsweise nächstgelegensten Seite (100) des Hindernisses, den ermittelten realen Abstand des Hindernisses von der Kameraeinrichtung (310), zum Beispiel gegenüber der Bildunterkante als fiktiver Kameraposition repräsentiert, **dadurch gekennzeichnet, dass** das in das Bild der Kameraeinrichtung eingeblendete grafische Objekt (210) in Form der Fahrspur in etwa auf Höhe der ermittelten Position des Hindernisses im Bild eine Begrenzung als Symbol für das Fahrspurende aufweist.

2. Verfahren nach Anspruch 1, **dadurch gekennzeichnet, dass** die Begrenzung die Form einer Begrenzungslinie (212) und/oder einer symbolisch auf der Fahrspur stehenden Begrenzungseinrichtung (214), wie beispielsweise einer Schranke oder eines Gatters oder eines Zaunes, aufweist.

3. Verfahren nach Anspruch 1 oder 2, **dadurch gekennzeichnet, dass** das grafische Objekt (210) in Form der Fahrspur den Verlauf der Fahrspur nur bis in etwa in Höhe der ermittelten Position des Hindernisses im Bild, nicht aber für größere Entfernungen von dem Kfz beziehungsweise der Kameraeinrichtung (310), abbildet.

4. Verfahren nach Anspruch 1 oder 2, **dadurch gekennzeichnet, dass** das grafische Objekt (210, 210') in Form der Fahrspur den Verlauf der Fahrspur in etwa ab der Höhe der ermittelten Position des Hindernisses im Bild für größere Entfernungen von dem Kfz nur noch angedeutet, zum Beispiel in Form gestrichelter Linien, abbildet.

5. Verfahren nach einem der vorangegangenen Ansprüche, **gekennzeichnet durch**: Ermitteln mindestens eines Raumbereiches (I, II, III) der Umgebung des Kfz, in welchem sich das Hindernis (210) - von der Kameraeinrichtung (310) aus gesehen - befindet; und Einblenden von mindestens einem grafischen Objekt (220-1,...-3) in das Bild der Kameraeinrichtung (310), welches die Zuordnung des Hindernisses zu dem mindestens einen Raumbereich und/oder die Position des Hindernisses (110, 120, 130) innerhalb dieses Raumbereiches (I, II, III) für den Betrachter des aufbereiteten Bildes optisch hervorhebt.

6. Verfahren nach Anspruch 5, **dadurch gekennzeichnet, dass** als grafisches Objekt (220-1,...-3) ein - sich vorzugsweise von der Unterkante des Bildes in vertikaler Richtung erstreckender - Balken in das Bild eingeblendet wird, um auf die Position des Hindernisses (110, 120, 130) relativ zur Position des Kfz beziehungsweise der Kameraeinrichtung (310) hinzuweisen, wobei die horizontale Position des Balkens im Bild den Raumbereich (I, II, III) der Umgebung; und/oder wobei die Höhe/Länge (H1, H2, H3) des Balkens in vertikaler Richtung, den ermittelten Abstand zwischen dem Hindernis und dem Kraftfahrzeug Kfz repräsentiert.

7. Verfahren nach Anspruch 6, **dadurch gekennzeichnet, dass** der Umriss des Balkens (220'-1,...-3) an die Darstellung der ermittelten Fahrspur angepasst und entsprechend verbogen und/oder verzerrt dargestellt wird.

8. Verfahren nach einem der vorangegangenen Ansprüche, **dadurch gekennzeichnet, dass** ein grafisches Objekt (214) an der Position des Hindernisses (100) im Bild, vorzugsweise an der Position der der Kameraeinrichtung (310) zugewandten beziehungsweise nächstgelegensten Seite des Hindernisses so in das Bild eingeblendet wird, dass es das Hindernis (100) grundsätzlich zumindest teilweise überdeckt.

9. Verfahren nach Anspruch 8, **dadurch gekennzeichnet, dass** der Umriss des grafischen Objektes (110, 120, 130) in Form einer geometrischen Grundform, wie zum Beispiel rechteckig, oval oder dreiecksförmig etc., oder in Form der ermittelten Kontur des Hindernisses gestaltet wird.

10. Verfahren nach einem der Ansprüche 1 bis 9, **dadurch gekennzeichnet, dass** das grafische Objekt (210, 220) semitransparent oder nur als Umriss dargestellt wird.

11. Verfahren nach einem der Ansprüche 1 bis 9, **dadurch gekennzeichnet, dass** das grafische Objekt (210, 220) als farblich gestaltete Fläche dargestellt wird, wobei optional die Farbgebung nach Maßgabe des ermittelten Abstandes des Hindernisses (100) von dem Kfz (400) beziehungsweise der Kameraeinrichtung (310) variiert werden kann.

12. Verfahren nach einem der Ansprüche 1 - 11, **dadurch gekennzeichnet, dass** das Bild der Kameraeinrichtung (310) im Bereich der ermittelten Position des Hindernisses (100) beispielsweise durch Aufhellung oder Einfärbung manipuliert wird, wobei - optional - die Manipulation nach Maßgabe durch die Größe des ermittelten Abstandes des Hindernisses (100) von dem Kfz (400) und/oder die Manipulation zeitlich, zum Beispiel in Form von Blinkeffekten, variierbar ist.

13. Computerprogramm mit Programmcode für eine Warneinrichtung (300) eines Kfz (400), **dadurch gekennzeichnet, dass** der Programmcode ausgebildet ist, zur Durchführung des Verfahrens nach einem der Ansprüche 1 bis 12.

14. Datenträger **gekennzeichnet durch** das Computerprogramm nach Anspruch 13.

15. Warnvorrichtung (300) für ein Kfz (400), umfassend eine Kameraeinrichtung (310) zum Erzeugen von Bildern von der Umgebung des Kfz, vorzugsweise in Fahrtrichtung; eine Bildaufbereitungseinrichtung (320) zum Aufbereiten der von der Kameraeinrichtung (310) erzeugten Bilder; und einer Anzeigeeinrichtung (340) zum Anzeigen des aufbereiteten Bildes für einen Betrachter, insbesondere den Fahrer des Kfz; wobei eine Hindernisdetektions-/Abstandsmesseinrichtung (320) vorgesehen ist zum Detektieren eines Hindernisses (100) in der Umgebung um das Kfz (400) und Ermitteln der realen Position des Hindernisses (100), vorzugsweise in Bezug auf das Kfz (400); eine Transformationseinrichtung (320) vorgesehen ist zum Transformieren der realen Position des Hindernisses in der Umgebung in eine entsprechende Position des Hindernisses in dem Bild der Kameraeinrichtung (310); und die Bildaufbereitungseinrichtung (320) ausgebildet ist, die Aufbereitung des Bildes der Kameraeinrichtung (310) unter Berücksichtigung der ermittelten Position des Hindernisses (100) in dem Bild durchzuführen, wobei die Warnvorrichtung ausgebildet ist, ein grafisches Objekt (210) in Form des vorzugsweise aufgrund des Lenkradwinkels des Kfz (400) ermittelten Verlaufs einer Fahrspur, auf welcher sich das Fahrzeug (400) zukünftig voraussichtlich bewegen wird, in das Bild der Kameraeinrichtung (310) einzublenden, die Position des Hindernisses in der Umgebung in Form des realen Abstandes zwischen dem Hindernis und dem Kfz (400) beziehungsweise der Kameraeinrichtung (310) zu ermitteln, wobei die Position des Hindernisses (100) im Bild, vorzugsweise die Position der der Kameraeinrichtung zugewandten beziehungsweise nächstgelegensten Seite (100) des Hindernisses, den ermittelten realen Abstand des Hindernisses von der Kameraeinrichtung (310), zum Beispiel gegenüber der Bildunterkante als fiktiver Kameraposition repräsentiert, **dadurch gekennzeichnet, dass** das in das Bild der Kameraeinrichtung eingeblendete grafische Objekt (210) in Form der Fahrspur in etwa auf Höhe der ermittelten Position des Hindernisses im Bild eine Begrenzung als Symbol für das Fahrspurende aufweist.

16. Warnvorrichtung (300) nach Anspruch 15, **dadurch gekennzeichnet, dass** die Bildaufbereitungseinrichtung (320) ausgebildet ist, die Aufbereitung des Bildes der Kameraeinrichtung (310) weiterhin unter Berücksichtigung von Fahrzeugparametern, wie zum Beispiel dem Lenkwinkel (LW), durchzuführen.

## Claims

1. Method for graphically processing an image, provided by a camera device (310), of the surroundings of a vehicle (400), in particular in the direction of travel of the vehicle, to an observer, in particular, the driver of the vehicle, having the steps: detection of an obstacle (100) in the surroundings of the vehicle (400) and determining its real position, preferably relative to the position of the vehicle (400); determining the real position of the obstacle in the surroundings and the corresponding position of the obstacle (100) in the image provided by the camera device; and processing the image thereby taking into consideration the determined position of the obstacle in the image, wherein that a graphical object (210) in the form of the expected, future course of travel of the vehicle (400), preferably determined on the basis of the steering angle of the vehicle (400), is faded into the image of the camera device (310); the position of the obstacle in the surroundings is determined in the form of the real distance between the obstacle and the vehicle (400) or the camera device (310); and the position of the obstacle (100) in the image, preferably the position of the side (100) of the obstacle facing or closest to the camera device, represents the determined real distance between the obstacle and the camera device (310) e.g. relative to a fictitious camera position represented by a lower edge of the image, **characterized in that** the graphical object (210) which is faded into the image of the camera device in the form of the course of travel disposed approximately at the level of the determined position of the obstacle in the image comprises a limit as a symbol of the end of the traveling motion.

2. Method according to claim 1, **characterized in that** the limit is in the form of a limiting line (212) and/or in the form of a limiting means (214) symbolically presented on the course of travel, such as e.g. a barrier or a gate or a fence.

3. Method according to claim 1 or 2**, characterized in that** the graphical object (210) in the form of the course of travel is imaged only to approximately the level of the determined position of the obstacle in the image, but not for larger distances from the vehicle or the camera device (310).

4. Method according to claim 1 or 2, **characterized in that,** for large distances from the vehicle, the graphical object (210, 210') in the form of the course of travel is only schematically indicated, e.g. in the form of dashed lines, beyond the approximate location of the determined position of the obstacle in the image.

5. Method according to any one of the preceding claims, **characterized by**: detection of at least one region (I, II, III) of the surroundings of the vehicle, where the obstacle (210) is located - as viewed by the camera device (310) -; and fading in of at least one graphical object (220-1,...-3) into the image of the camera device (310) which optically emphasizes the correlation between the obstacle and the at least one region and/or the position of the obstacle (110, 120, 130) within this region (I, II, III) to the viewer of the processed image.

6. Method according to claim 5, **characterized in that** a bar - preferably extending from the lower edge of the image in a vertical direction - is faded into the image as graphical object (220-1,...-3) in order to indicate the position of the obstacle (110, 120, 130) relative to the position of the vehicle or the camera device (310), wherein the horizontal position of the bar in the image represents the region (I, II, III) of the surroundings; and/or wherein the height/length (H1, H2, H3) of the bar in the vertical direction represents the determined distance between the obstacle and the vehicle.

7. Method according to claim 6, **characterized in that** the outline of the bar (220'-1,...-3) is adjusted to the representation of the determined course of travel and is represented in a correspondingly bent and/or distorted fashion.

8. Method according to any one of the preceding claims, **characterized in that** a graphical object (214) is faded into the image at the position of the obstacle (100) in the image, preferably at the position of the side of the obstacle facing or closest to the camera device (310), such that the obstacle (100) is at least partially covered.

9. Method according to claim 8, **characterized in that** the outline of the graphical object (110, 120, 130) has a basic geometric form such as e.g. rectangular, oval or triangular etc., or the form of the determined outline of the obstacle.

10. Method according to any one of the claims 1 through 9, **characterized in that** the graphical object (210, 220) is semi-transparent or represented only as an outline.

11. Method according to any one of the claims 1 through 9, **characterized in that** the graphical object (210, 220) is represented as a colored surface, wherein the color can optionally be varied in accordance with the determined distance between the obstacle (100) and the vehicle (400) or the camera device (310).

12. Method according to any one of the claims 1 - 11, **characterized in that** the image of the camera device (310) is manipulated in the region of the determined position of the obstacle (100), e.g. by brightening or coloring, wherein the manipulation can - optionally - be varied in accordance with the magnitude of the determined distance between the obstacle (100) and the vehicle (400) and/or by varying the manipulation in time, e.g. in the form of flashing effects.

13. Computer program comprising a program code for a warning device (300) of a vehicle (400), **characterized in that** the program code is designed to perform the method in accordance with any one of the claims 1 through 12.

14. Data carrier, **characterized by** the computer program according to claim 13.

15. Warning device (300) for a vehicle (400), comprising a camera device (310) for generating images of the surroundings of the vehicle, preferably in the direction of travel; an image processing device (320) for processing the images produced by the camera device (310); and a display means (340) for displaying the processed image to a viewer, in particular, the driver of the vehicle; wherein an obstacle detection/distance measuring device (320) is provided for detecting an obstacle (100) in the surroundings of the vehicle (400) and for determining the real position of the obstacle (100), preferably relative to the vehicle (400); a transformation device (320) is provided for transforming the real position of the obstacle in the surroundings into a corresponding position of the obstacle in the image of the camera device (310); and the image processing device (320) is designed to process the image of the camera device (310), thereby taking into consideration the determined position of the obstacle (100) in the image, wherein the warning device is designed to fade in a graphical object (210) in the form of the expected, future course of travel of the vehicle (400), preferably determined on the basis of the steering angle of the vehicle (400), into the image of the camera device (310), to determine the position of the obstacle in the surroundings in the form of the real distance between the obstacle and the vehicle (400) or the camera device (310), wherein the position of the obstacle (100) in the image, preferably the position of the side (100) of the obstacle facing or closest to the camera device, represents the determined real distance between the obstacle and the camera device (310) e.g. relative to a fictitious camera position represented by a lower edge of the image, **characterized in that** the graphical object (210) which is faded into the image of the camera device in the form of the course of travel disposed approximately at the level of the determined position of the obstacle in the image comprises a limit as a symbol of the end of the traveling motion.

16. Warning device (300) according to claim 15, **characterized in that** the image processing device (320) is designed to process the image of the camera device (310), thereby still taking into consideration the vehicle parameters, such as e.g. the steering angle (LW).

## Revendications

1. Procédé pour le traitement graphique d'une image des alentours d'un véhicule automobile Kfz (400), fournie par un dispositif de caméra (310), en particulier dans le sens de la marche du Kfz, à destination d'un observateur, en particulier du conducteur du Kfz, présentant les étapes consistant à :
détecter un obstacle (100) aux alentours du Kfz (400) et déterminer la position réelle de celui-ci, de préférence par rapport à la position du Kfz (400) ;
déterminer la position réelle de l'obstacle aux alentours et la position correspondante de l'obstacle (100) sur l'image fournie par le dispositif de caméra ; et
exécuter le traitement de l'image en tenant compte de la position déterminée de l'obstacle sur l'image,
dans lequel un objet graphique (210), sous la forme de la trajectoire, déterminée de préférence sur la base de l'angle de volant du Kfz (400), d'une voie de circulation sur laquelle le véhicule (400) est susceptible de se déplacer, est incrusté sur l'image du dispositif de caméra (310) ;
dans lequel la position de l'obstacle aux alentours est déterminée sous la forme de la distance réelle entre l'obstacle et le Kfz (400) ou le dispositif de caméra (310) ; et
dans lequel la position de l'obstacle (100) sur l'image, de préférence la position du côté (100) de l'obstacle qui est tourné vers le dispositif de caméra ou situé le plus proche de celui-ci, représente la distance réelle déterminée de l'obstacle par rapport au dispositif de caméra (310), par exemple par rapport au bord inférieur de l'image, comme une position.de caméra fictive, **caractérisé en ce que** l'objet graphique (210) incrusté sur l'image du dispositif de caméra sous la forme de la voie de circulation présente approximativement à la hauteur de la position déterminée de l'obstacle sur l'image une démarcation comme un symbole pour la fin de la voie de circulation.

2. Procédé selon la revendication 1, **caractérisé en ce que** la démarcation présente la forme d'une ligne de démarcation (212) et/ou d'un dispositif de démarcation (214) se trouvant symboliquement sur la voie de circulation, comme par exemple une barrière ou une grille ou une clôture.

3. Procédé selon la revendication 1 ou 2, **caractérisé en ce que** l'objet graphique (210) sous la forme de la voie de circulation reproduit la trajectoire de la voie de circulation seulement jusqu'à environ la hauteur de la position déterminée de l'obstacle sur l'image, mais pas pour des distances supérieures par rapport au Kfz ou au dispositif de caméra (310).

4. Procédé selon la revendication 1 ou 2, **caractérisé en ce que** l'objet graphique (210, 210') sous la forme de la voie de circulation ne fait plus qu'esquisser la trajectoire de la voie de circulation approximativement à partir de la hauteur de la position déterminée de l'obstacle sur l'image pour des distances plus grandes par rapport au Kfz, par exemple sous forme de lignes pointillées.

5. Procédé selon l'une quelconque des revendications précédentes, **caractérisé par** les étapes consistant à :
déterminer au moins une zone spatiale (I, II, III) des alentours du Kfz, dans laquelle se trouve l'obstacle (210) - vu depuis le dispositif de caméra (310) ; et incruster au moins un objet graphique (220-1, ... -3) sur l'image du dispositif de caméra (310) qui fait ressortir visuellement l'attribution de l'obstacle à ladite au moins une zone spatiale et/ou la position de l'obstacle (110, 120, 130) à l'intérieur de cette zone spatiale (I, II, III) pour l'observateur de l'image traitée.

6. Procédé selon la revendication 5, **caractérisé en ce que** comme objet graphique (220-1, ... -3) une barre - s'étendant de préférence depuis le bord inférieur de l'image dans la direction verticale - est incrustée sur l'image afin de signaler la position de l'obstacle (110, 120, 130) par rapport à la position du Kfz ou du dispositif de caméra (310), dans lequel la position horizontale de la barre sur l'image représente la zone spatiale (I, II, III) des alentours ; et/ou dans lequel la hauteur/longueur (H1, H2, H3) de la barre dans la direction verticale représente la distance déterminée entre l'obstacle et le véhicule automobile Kfz.

7. Procédé selon la revendication 6, **caractérisé en ce que** le contour de la barre (220'-1, ... -3) est adapté à la représentation de la voie de circulation déterminée et est représenté avec une courbure et/ou déformation correspondante(s).

8. Procédé selon l'une quelconque des revendications précédentes, **caractérisé en ce qu'**un objet graphique (214) dans la position de l'obstacle (100) sur l'image, de préférence dans la position du côté de l'obstacle qui est tourné vers le dispositif de caméra (310) ou qui se trouve le plus proche de celui-ci, est incrusté sur l'image de telle sorte qu'il recouvre l'obstacle (100) en principe au moins en partie.

9. Procédé selon la revendication 8**, caractérisé en ce que** le contour de l'objet graphique (110, 120, 130) est réalisé sous la forme d'une forme géométrique de base, comme par exemple une forme rectangulaire, ovale ou triangulaire, etc., ou sous la forme du contour déterminé de l'obstacle.

10. Procédé selon l'une quelconque des revendications 1 à 9, **caractérisé en ce que** l'objet graphique (210, 220) est représenté de façon semi-transparente ou seulement comme un contour.

11. Procédé selon l'une quelconque des revendications 1 à 9, **caractérisé en ce que** l'objet graphique (210, 220) est représenté comme une surface réalisée en couleur, dans lequel en option la coloration peut être variée selon la spécification de la distance déterminée de l'obstacle (100) par rapport au Kfz (400) ou au dispositif de caméra (310).

12. Procédé selon l'une quelconque des revendications 1 à 11, **caractérisé en ce que** l'image du dispositif de caméra (310) est manipulée dans la zone de la position déterminée de l'obstacle (100), par exemple par un éclaircissement ou une coloration, dans lequel - en option - la manipulation est variable selon la spécification par la grandeur de la distance déterminée de l'obstacle (100) par rapport au Kfz (400) et/ou la manipulation est variable dans le temps, par exemple sous la forme d'effets de clignotement.

13. Programme informatique avec un code de programme pour un dispositif d'avertissement (300) d'un Kfz (400), **caractérisé en ce que** le code de programme est réalisé pour exécuter le procédé selon l'une quelconque des revendications 1 à 12.

14. Support de données, **caractérisé par** le programme informatique selon la revendication 13.

15. Dispositif d'avertissement (300) pour un Kfz (400), comprenant
un dispositif de caméra (310) pour générer des images des alentours du Kfz, de préférence dans le sens de la marche ;
un dispositif de traitement d'image (320) pour traiter les images générées par le dispositif de caméra (310) ; et
un dispositif d'affichage (340) pour afficher l'image traitée à destination d'un observateur, en particulier du conducteur du Kfz ;
dans lequel un dispositif de détection d'obstacle/ mesure de distance (320) est prévu pour détecter un obstacle (100) aux alentours du Kfz (400) et pour déterminer la position réelle de l'obstacle (100), de préférence par rapport au Kfz (400) ;
dans lequel un dispositif de transformation (320) est prévu pour transformer la position réelle de l'obstacle aux alentours en une position correspondante de l'obstacle sur l'image du dispositif de caméra (310) ; et
dans lequel le dispositif de traitement d'image (320) est réalisé pour exécuter le traitement de l'image du dispositif de caméra (310) en tenant compte de la position déterminée de l'obstacle (100) sur l'image,
dans lequel le dispositif d'avertissement est réalisé pour incruster un objet graphique (210) sous la forme de la trajectoire, déterminée de préférence sur la base de l'angle de volant du Kfz (400), d'une voie de circulation sur laquelle le véhicule (400) est susceptible de se déplacer, sur l'image du dispositif de caméra (310), pour déterminer la position de l'obstacle aux alentours sous la forme de la distance réelle entre l'obstacle et le Kfz (400) ou le dispositif de caméra (310),
dans lequel la position de l'obstacle (100) sur l'image, de préférence la position du côté (100) de l'obstacle qui est tourné vers le dispositif de caméra ou qui est le plus proche de celui-ci, représente la distance réelle déterminée de l'obstacle par rapport au dispositif de caméra (310), par exemple par rapport au bord inférieur de l'image, comme une position de caméra fictive, **caractérisé en ce que** l'objet graphique (210) incrusté sur l'image du dispositif de caméra sous la forme de la voie de circulation présente approximativement à la hauteur de la position déterminée de l'obstacle sur l'image une démarcation comme un symbole pour la fin de la voie de circulation.

16. Dispositif d'avertissement (300) selon la revendication 15, **caractérisé en ce que** le dispositif de traitement d'image (320) est réalisé pour exécuter le traitement de l'image du dispositif de caméra (310) de plus en tenant compte de paramètres de véhicule, comme par exemple de l'angle de braquage (LW).
